# EUROPÄISCHE PATENTSCHRIFT

(11) **EP 3 103 696 B1**
(45) Veröffentlichungstag und Bekanntmachung des Hinweises auf die Patenterteilung: **27.05.2020**
(21) Anmeldenummer: 16173441.3
(22) Anmeldetag: 08.06.2016
(51) Int. Cl.: B61D 37/00, B61D 33/00, B60N 2/015

(54) **VORRICHTUNG ZUM VERSTAUEN EINES SPERRIGEN ODER LÄNGLICHEN GEGENSTANDS**
DEVICE FOR STOWING A BULKY OR ELONGATED OBJECT
DISPOSITIF DE RANGEMENT D'OBJETS ALLONGES OU ENCOMBRANTS

(30) Priorität: 09.06.2015 DE 102015210524
(43) Veröffentlichungstag der Anmeldung: 14.12.2016
(73) Patentinhaber: Bombardier Transportation GmbH, 10785 Berlin (DE)
(72) Erfinder: Monarth, Andreas, 1090 Wien (AT); Pramper, Rainer, 1100 Wien (AT); Strauss, Christian, 1090 Wien (AT)
(74) Vertreter: Patentanwälte Bressel und Partner mbB

(56) Entgegenhaltungen:
- EP-A1- 0 673 821
- EP-A1- 2 832 628
- WO-A1-2014/044796
- DE-A1- 19 539 787
- JP-A- 2007 230 281
- US-A1- 2005 092 800
- US-A1- 2011 140 499

## Beschreibung

Die Erfindung betrifft eine Vorrichtung zum Verstauen eines sperrigen oder länglichen Gegenstands in einem Fahrgastraum eines öffentlichen Verkehrsmittels sowie ein Schienenfahrzeug, das eine solche Vorrichtung aufweist, und ein Verfahren zur Bestückung eines Fahrgastraums eines öffentlichen Verkehrsmittels mit einer solchen Vorrichtung.

Aus dem Stand der Technik sind Vorrichtungen zur Arretierung von länglichen Gegenständen, beispielsweise von Surfbrettern, Ski oder Snowboards in Schienenfahrzeugen bekannt. WO 2014/044796 A1 beschreibt eine solche Vorrichtung, bei der ein vertikaler, mit einem Wagenkasten des Schienenfahrzeugs verbundener Halterabschnitt vorgesehen ist, an welchem ein Halteelement angeordnet ist, welches mit dem Halterabschnitt in einem Wirkungszusammenhang zur Arretierung der länglichen Gegenstände steht. Es sind beispielsweise unterhalb des Halterabschnitts Mittel zur bodenseitigen Fixierung der zu arretierenden Gegenstände vorgesehen. Vorteilhaft umfassen in WO 2014/044796 A1 diese Mittel eine schalen- oder wannenartige Vertiefung in oder auf dem Wagenboden des Schienenfahrzeugs. Der Aufbau und die Montage einer solchen in WO 2014/044796 A1 beschriebenen Vorrichtung gestaltet sich relativ aufwendig.

Die US 2011 140499 A1 offenbart ein modulares Transportsystem, welches ein Schienensystem und/oder einen modularen Sitz aufweist, und genutzt werden kann, um einen Transportwagen zu verändern. In das Schienensystem kann eine Mehrzahl von Zubehörteilen eingebaut werden, wodurch der Transportwagen konfiguriert werden kann. Die Vorrichtung der US 2011 140499 A1 umfasst beispielsweise eine Anordnung in Form eines Halters für eine Reifen eines Fahrrads. Diese Anordnung umfasst einen Montagebereich, einen vom Montagebereich abstehenden Bodenbereich und ein über dem Bodenbereich angeordnetes Stützelement, in welches der Fahrradreifen gestellt werden kann.

Die EP 2832628 A1 offenbart einen Innenausstattungsgegenstand mit Mitteln zur Halterung von Zweirädern, insbesondere zur Anordnung in Fahrzeugen des öffentlichen Verkehrs. Um platzsparend eine Fahrradhalterung in Fahrzeugen des öffentlichen Nahverkehrs zu integrieren, weist ein Innenausstattungsgegenstand insbesondere eine Haltestange und eine Pedalaufnahme für ein Fahrradpedal auf.

Aufgabe der Erfindung ist es, eine einfacher zu montierende und möglichst an verschiedenen Orten im Innenraum eines Fahrzeugs des öffentlichen Verkehrs montierbare Vorrichtung zum Verstauen eines sperrigen oder länglichen Gegenstands anzugeben.

Gelöst wird diese Aufgabe mit einer Vorrichtung gemäß Anspruch 1. Vorteilhafte Ausgestaltungen der Erfindung sind in den Unteransprüchen angegeben. Angegeben wird von der Erfindung eine Vorrichtung zum Verstauen eines sperrigen und/oder länglichen Gegenstands in einem Fahrgastraum eines Fahrzeugs des öffentlichen Verkehrs, aufweisend
- einen Montagebereich, über den die Vorrichtung an einer Wand des Fahrzeugs befestigbar ist, und der zumindest ein erstes Verbindungsmittel zur Befestigung der Vorrichtung an der Wand aufweist,
- einen vom Montagebereich abstehenden Bodenbereich, der mit dem Montagebereich verbunden ist, und auf dem ein Gegenstand abstellbar ist,
- zumindest eine über dem Bodenbereich angeordnetes Stützelement zum Abstützen des Gegenstandes.
- ein über dem Bodenbereich angeordnetes Befestigungsmittel zur Befestigung des Gegenstandes an der Vorrichtung, wobei das Befestigungsmittel an dem Stützelement angeordnet ist und wobei der Gegenstand, wenn er auf dem Bodenbereich abgestellt ist, mit dem Befestigungsmittel in einer höheren Position an der Vorrichtung befestigt werden kann und
- wobei die Vorrichtung ein zweites Verbindungsmittel aufweist, mit welchem die Vorrichtung an einer Fahrgasthaltestange oder an einer Decke des Fahrgastraums befestigbar ist.

Mit der Erfindung werden gemäß ihrer allgemeinen Ausführungsform oder einer ihrer speziellen Ausführungsformen, die nachfolgend beschrieben werden, einer oder mehrere der folgenden Vorteile erzielt:
- Es wird eine modulare Vorrichtung zum Verstauen bereitgestellt, die variabel veränderbar, einbaubar, tauschbar oder erweiterbar ist.
- Bestehende Montagepunkte und Montagemöglichkeiten, beispielsweise für Sitze, können zur Befestigung der Vorrichtung genutzt werden. Beispielsweise ist eine Montage an bestehenden C-Schienen im Innenraum des Fahrzeugs möglich, welche ansonsten zur Befestigung von Sitzen vorgesehen sind.
- Es wird eine variable Halterung für sperrige Gepäckstücke, wie Ski, Snowboard, Schlitten, Bob, Musikinstrumente, Fahrräder etc. zur Verfügung gestellt.
- Die Vorrichtung kann außerdem zur Aufnahme von Prospekten, Werbematerialien, Tourismusinformationsmaterial, etc. dienen.
- Die Vorrichtung weist einen integrierten Bodenbereich auf, der rutschfest, verstärkt und/oder austauschbar ausgeführt sein kann.
- Die Vorrichtung ist alternativ zu einer Sitzgruppe, einer Sitzreihe oder einem Einzelsitz einbaubar oder damit tauschbar.
- Verschiedene Einbaulagen der Halteeinrichtung im Fahrzeug sind möglich, beispielsweise in Fahrzeugquerrichtung oder längs einer Seitenwand für größere Durchtritts- oder Durchgangsbreiten.
- Die Vorrichtung ist individuell an Kundenwünsche anpass- und erweiterbar.
- Durch die Vorrichtung wird ein definierter Aufbewahrungsort für sperrige oder längliche Gegenstände bereitgestellt, wodurch anderweitige Fahrzeuginneneinrichtungen, wie z.B. Scheiben, Verkleidungsteile oder Bodenbelag, geschont werden.

Der Bodenbereich kann mit dem Montagebereich direkt oder indirekt, beispielsweise über Zwischenstücke, verbunden sein. Montagebereich und Bodenbereich sind in der Vorrichtung zu einer Einheit verbunden. Montagebereich und Bodenbereich können einstückig ausgeführt sein. Somit ist der Bodenbereich zusammen mit dem Montagebereich montierbar, indem die Vorrichtung mit dem Montagebereich an einer Fahrzeugwand befestigbar ist. Ebenso ist der Bodenbereich zusammen mit dem Montagebereich entnehmbar, wenn die Vorrichtung demontiert wird.

Der Bodenbereich weist insbesondere eine Bodenfläche auf, auf der ein Gegenstand abstellbar ist. Beispielsweise kann eine Bodenplatte vorgesehen sein.

Vorzugsweise bilden ein Bodenbereich und ein Montagebereich zusammen eine L-Form, wobei der Bodenbereich den unteren Schenkel des L bildet und der Montagebereich den, anderen, seitlichen Schenkel des L. Von einer L-Form sind auch Formen mit gekrümmtem Schenkel, sowie spitze oder stumpfe Winkel zwischen den Schenkeln umfasst.

Das Stützelement kann beispielsweise als Wand, als Träger oder als Leiste ausgeführt sein. Eine Wand, auch bezeichnet als Wandelement, kann sich beispielsweise ausgehend von dem Bodenbereich nach oben erstrecken. Eine solche Wand kann eine Trennwand bilden, welche die Vorrichtung, insbesondere den Bodenbereich in zwei Bereiche teilt. Die so gebildeten Bereiche können von gegenüber liegenden Seiten der Vorrichtung zugänglich sein. Die Wand kann mit dem Montagebereich und/oder mit dem Bodenbereich verbunden sein. Eine Leiste kann beispielsweise mit dem Montagebereich verbunden sein. Ein Querträger kann beispielsweise mit einem Montagebereich und mit einem an anderer Stelle beschriebenen Außenabschnitt verbunden sein.

Die Vorrichtung weist ein über dem Bodenbereich angeordnetes Halte- oder Befestigungsmittel auf, das der Befestigung des Gegenstandes an der Vorrichtung dient. Erfindungsgemäß ist das Befestigungsmittel an dem Stützelement angeordnet, insbesondere mit dem Stützelement verbunden, oder an dem Stützelement ausgebildet. Beispielhafte Befestigungsmittel sind Haken, Schlaufen, Riemen, Ösen, Schnüre, Bänder, Gurte, Clips, (Klapp)Bügel, oder eine Kombination aus zwei oder mehr davon, wobei das Befestigungsmittel nicht beschränkt ist. Bei einer erfindungsgemäßen Vorrichtung kann ein Gegenstand auf dem Bodenbereich abgestellt werden und in einer höheren Position mit dem Befestigungsmittel an der Vorrichtung befestigt werden. Die Last des Gegenstands wird vorzugsweise vom Bodenbereich aufgenommen. Das Befestigungsmittel dient vorzugsweise zur Sicherung des Gegenstandes gegen Verkippen.

In einer Ausführungsform ist die Vorrichtung als in Einbaulage in den Fahrgastraum an der Wand hängende Vorrichtung ausgestaltet, bei welcher der Bodenbereich berührungslos zu einem Boden des Fahrgastraums ist. Anders ausgedrückt ist der Bodenbereich vom Boden des Fahrgastraums beabstandet. Dadurch wird u.a. der Vorteil erzielt, dass eine Reinigung des Fahrzeugbodens nicht behindert wird. Ferner müssen keine Befestigungsmittel auf dem Boden des Fahrgastraums vorgesehen sein, welche die Bodenstruktur unterbrechen und potentielle Stellen für Wassereintritt sind. Die Vorrichtung ist insbesondere als an der Wand eines Fahrzeugs aufhängbare Vorrichtung ausgestaltet, bei der eine Gewichtskraft von verstauten Gegenständen über den Montagebereich und die Fahrzeugwand abgeleitet wird. Zusätzlich kann eine Befestigung an einem Deckenbereich vorgesehen sein, wie nachfolgend an speziellen Ausführungsformen noch weiter erläutert.

Die Vorrichtung weist ein zweites Verbindungsmittel auf, mit welchem die Vorrichtung in einer Fahrgasthaltestange oder an einer Decke des Fahrgastraums befestigbar ist. Die Fahrgasthaltestange ist insbesondere eine in Fahrzeuglängsrichtung verlaufende Haltestange, die beispielsweise an anderen, aufrecht stehenden Haltestangen und/oder an einer Fahrzeugdecke befestigt ist.

Generell können hierin erwähnte Verbindungsmittel, falls erforderlich, mit zumindest einem weiteren Verbindungsmittel zusammenwirken. Ist beispielsweise an der Vorrichtung ein Loch zur Herstellung einer Verbindung als Verbindungsmittel vorgesehen, so kann eine Schraube als weiteres Verbindungsmittel hinzugezogen werden, die mit noch einem weiteren Verbindungsmittel, das an der Wand vorgesehen ist, zusammenwirken kann. Ein Verbindungsmittel kann somit ein Teil einer Verbindungsanordnung sein, die aus mehreren Verbindungsmitteln gebildet wird.

In einer Ausführungsform weist der Bodenbereich eine Bodenfläche und zumindest ein die Bodenfläche am Rand begrenzendes Begrenzungselement auf. Das Begrenzungselement verhindert, dort wo es vorgesehen ist, eine seitliche Bewegung eines auf dem Bodenbereich abgestellten Gegenstandes aus dem Bodenbereich hinaus. Insofern bildet das Begrenzungselement einen Anschlag, der eine seitliche Bewegung des Gegenstands begrenzt. Der Gegenstand kann insbesondere dadurch gegen Abrutschen vom Bodenbereich gesichert werden.

Das Begrenzungselement kann am Bodenbereich angebracht oder ausgeformt sein.

In einer Ausführungsform der Erfindung ist der Bodenbereich wannenförmig. In dieser Ausführungsform weist der Bodenbereich einen Wannenboden auf, der eine bereits zuvor erwähnte Bodenfläche aufweist. Ferner weist der Bodenbereich Seitenwände auf, auch bezeichnet als Wannenseitenwände. Die Wannenseitenwände haben die Funktion eines zuvor erwähnten Begrenzungselements.

In einer Ausführungsform der Erfindung ist der Bodenbereich austauschbar. Insbesondere sind ein Montagebereich und ein Bodenbereich lösbar miteinander verbunden.

In einer Ausführungsform ist ein zuvor erwähntes erstes Verbindungsmittel, das zur Befestigung des Montagebereichs an der Fahrzeugwand dient, so angeordnet und/oder ausgestaltet, dass die Vorrichtung an einem unteren Abschnitt der Wand, insbesondere unterhalb eines Fensters, befestigbar ist. In dieser Ausführungsform ist eine Vorrichtung vorzugsweise dort befestigbar, wo ansonsten im Innenraum des Fahrzeugs Sitze befestigbar sind. Es kann das erste Verbindungsmittel mit zumindest einem an der Wand angeordneten dritten Verbindungsmittel, das zur Befestigung eines Sitzes vorgesehen ist, zusammenwirken. Somit ist die Vorrichtung alternativ zu einem Sitz an der Wand befestigbar.

In einer Ausführungsform weist die Vorrichtung einen sich vom Bodenbereich nach oben erstreckenden Außenabschnitt auf, der die Vorrichtung zu dem Fahrgastraum hin begrenzt. Der Außenabschnitt kann insbesondere ein vorangehend bereits erwähntes zweites Verbindungsmittel aufweisen, mit welchem die Vorrichtung an einer Fahrgasthaltestange oder an einer Decke des Fahrgastraums befestigbar ist. Der Außenabschnitt kann sich vom Bodenbereich der Vorrichtung bis in die Nähe oder bis an eine Decke des Innenraums erstrecken. Der Außenabschnitt kann eine Seitenwand der Vorrichtung bilden.

In einem weiteren Aspekt betrifft die Erfindung ein Schienenfahrzeug, aufweisend eine vorangehend allgemein oder speziell beschriebene Vorrichtung. Beispielhafte Schienenfahrzeuge sind Straßenbahnen, S-Bahnen, U-Bahnen, Magnetschwebebahnen, Fernverkehrszüge, Regionalzüge oder Nahverkehrszüge.

Bei dem Erfindungsgemäßen Schienenfahrzeug ist in einer Ausführungsform die Vorrichtung über ein an der Wand des Schienenfahrzeugs angeordnetes drittes Verbindungsmittel, das alternativ zur Befestigung eines Sitzes vorgesehen ist, an der Wand angebracht. Weitere Anbringungsmöglichkeiten oder Einbaulagen, die zuvor anhand der Vorrichtung beschrieben wurden, können in dem Schienenfahrzeug zur Anwendung kommen.

In einem weiteren Aspekt betrifft die Erfindung ein Verfahren zur Bestückung eines Fahrgastraums eines Fahrzeugs des öffentlichen Verkehrs mit einer Vorrichtung zum Verstauen eines sperrigen und/oder länglichen Gegenstands in dem Fahrgastraum, wobei bei dem Verfahren eine zuvor beschriebene Vorrichtung über ein an einer Wand des Fahrzeugs, insbesondere einer Wand eines Schienenfahrzeugs, angeordnetes Verbindungsmittel, das alternativ zur Befestigung eines Sitzes vorgesehen ist, an der Wand angebracht wird.

Bei dem Verfahren kann jegliche Vorrichtung verwendet werden, die zuvor beschrieben wurde. Ferner können bei dem Verfahren einzelne oder in Kombination jegliche Verfahrensschritte zur Anwendung kommen, die bereits zuvor anhand einer erfindungsgemäßen Vorrichtung beschrieben wurden.

Nachfolgend wird die Erfindung anhand von Ausführungsbeispielen beschrieben. Es zeigen:
- Fig. 1: einen Fahrgastraum nach dem Stand der Technik mit an einer Seitenwand befestigten Sitzen,
- Fig. 2: einen Fahrgastraum aus Fig. 1 mit einer an der Seitenwand befestigten erfindungsgemäßen Vorrichtung nach einer ersten Ausführungsform,
- Fig. 3: einen Fahrgastraum mit einer an der Wand befestigten erfindungsgemäßen Vorrichtung gemäß einer zweiten Ausführungsform, und
- Fig. 4: einen Fahrgastraum mit einer an der Wand befestigten erfindungsgemäßen Vorrichtung nach einer dritten Ausführungsform.

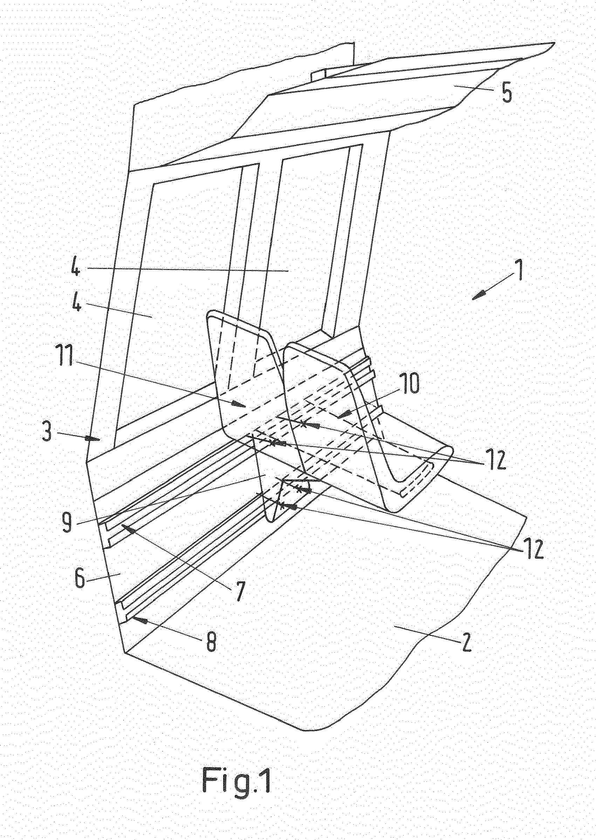

Fig. 1 zeigt in einem Ausschnitt den Fahrgastraum 1 eines Schienenfahrzeugs, hier einer Straßenbahn. Ausschnittweise gezeigt sind der Boden 2 des Fahrgastraums 1, die Seitenwand 3 mit den Fenstern 4 sowie eine Innenraumdecke 5.

In den Figuren sind an sich verdeckte Elemente durch gestrichelte Linien angedeutet, um zu einer vollständigen Darstellung zu gelangen.

Im unteren Abschnitt 6 der Seitenwand 3, bei dem es sich um den Abschnitt unterhalb der Fenster 4 handelt, sind C-Schienen 7, 8 vorgesehen, an denen der Sitzträger 9 befestigt ist. Auf dem Sitzträger 9 sind die Sitze 10, 11 befestigt. An den Montagestellen 12 ist der Sitzträger 9 an den C-Schienen 7, 8 befestigt. Beispielsweise können als weitere Befestigungsmittel Nutensteine in die C-Schienen 7, 8 eingeführt sein. Die Nutensteine können hervorstehende Gewindestangen aufweisen, auf welche der Sitzträger 9 aufgesetzt ist und als Konterelemente können Schraubenmuttern (nicht gezeigt) dienen. Ein vorangehend genannter Nutenstein ist beispielsweise bekannt aus DE 202 17 838 U1. Alternativ ist es möglich, eine Verbindungsanordnung zu verwenden, wie sie aus EP 25 05 449 A bekannt ist.

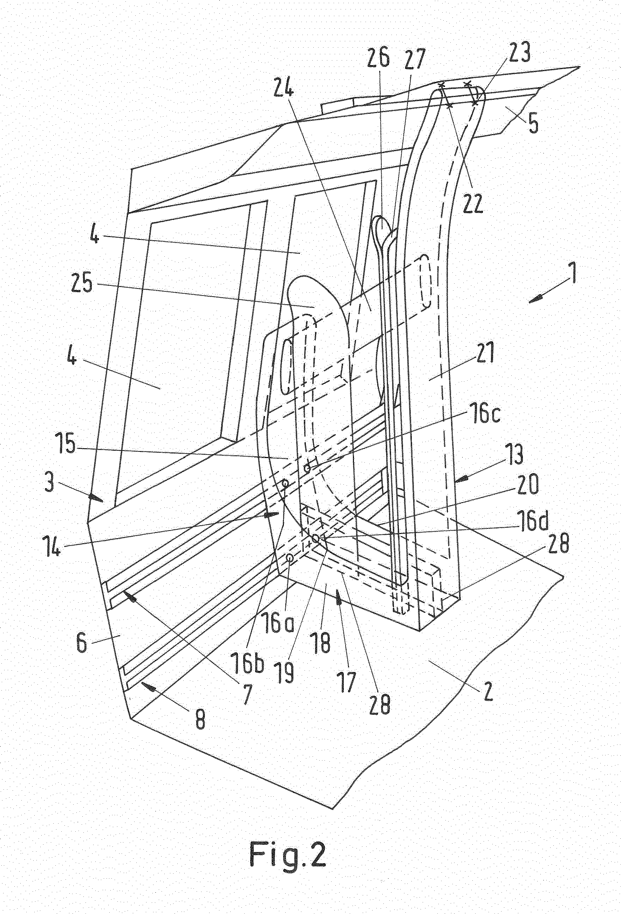

Die Fig. 2 zeigt den gleichen Innenraumausschnitt wie Fig. 1, wobei identische Bezugszeichen identische Gegenstände und Merkmale bezeichnen. Statt der Sitze 10, 11 ist eine erfindungsgemäße Vorrichtung 13 an den C-Schienen 7, 8 befestigt.

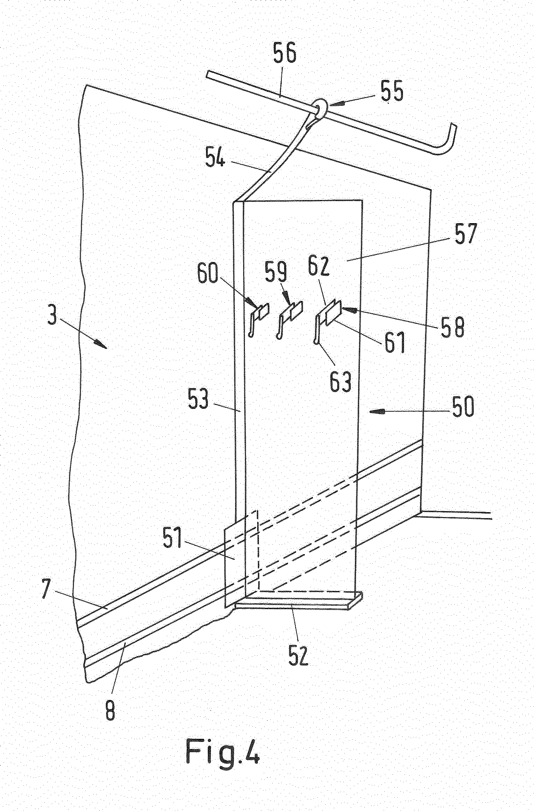

Die Vorrichtung 13 weist den Montagebereich 14 auf, über den die Befestigung der Vorrichtung 13 an der Wand 3 erfolgt. Der Montagebereich 14 weist die Rückwand 15 auf, in welcher vier Öffnungen 16a, 16b, 16c, 16d vorgesehen sind. Die Löcher 16a-d können Gewindeschrauben aufnehmen, auf welche als Konterelemente wiederum Muttern geschraubt sind, um eine Befestigung der Vorrichtung 13 an der Wand zu erzielen. Wiederum kann eine Anordnung aus Nutenstein und Gewindeschraube als weitere Verbindungsmittel herangezogen werden, wie in DE 202 17 838 U1 (insbesondere Fig. 4 und Fig. 5) beschrieben. Nutensteine und Schrauben zur Befestigung der Vorrichtung 13 an den C-Schienen 7, 8 sind in Fig. 2 nicht dargestellt.

An den Montagebereich 14 schließt sich der Bodenbereich 17 an. Montagebereich 14 und Bodenbereich 17 können einstückig ausgebildet sein. Beispielsweise kann die gesamte Vorrichtung 13 aus gebogenem und/oder zusammengefügtem Material ausgeführt sein, z.B. Kunststoff, Blech oder GFK.

Der Bodenbereich 17 steht vom Montageberich 14 in Richtung Innenraum 1 ab. Der Bodenbereich 17 weist die Bodenfläche 18 und die Seitenwände 19, 20 auf. Die Seitenwände 19, 20 erstrecken sich auch noch nach oben entlang des Montagebereichs 14. Die Seitenwände 19, 20 bilden Begrenzungselemente an Rändern der Bodenfläche 18.

Am wageninnenseitigen Ende des Bodenbereichs 17, gegenüber dem Montagebereich 14, ist ein Außenabschnitt 21 vorgesehen, der plattenförmig ausgeführt ist und sich von der Bodenfläche 18 bis hin zur Innendecke 5 erstreckt. Durch den Außenabschnitt 21 wird die Vorrichtung 13 zum Fahrgastraum hin abgeschlossen. Der Außenabschnitt 21 ist mit Verbindungsmitteln 22, 23 an seinem oberen Ende versehen. Beispielsweise handelt es sich hierbei auch um Bohrungen, wie bei den Verbindungsmitteln 16a-d. Eine Befestigung kann in analoger Weise erfolgen, wie die Befestigung des Montagebereichs 14 an der Wand 3.

Zwischen dem Montagebereich 14 und dem Außenabschnitt 21 erstreckt sich der Querträger 24, der beispielsweise mit Montagebereich 15 und Außenabschnitt 21 an seinen Enden stoffschlüssig verbunden ist. Alternativ kann statt eines hier dargestellten Querträgers eine Wand zwischen Montagebereich 14 und dem Außenabschnitt 21 angeordnet sein, die sich von dem Montagebereich 14 bis zu dem Außenabschnitt 21 und bis zu dem Bodenbereich 17 erstreckt. Eine solche Wand kann eine Trennwand bilden, welche die Vorrichtung in zwei Bereiche teilt. Eine solche Wand kann plattenförmig bzw. als Platte ausgestaltet sein. Der Querträger 24 ist ein Stützelement, an dem ein länglicher Gegenstand angelehnt und abgestützt werden kann. Im vorliegenden Beispiel sind in die Vorrichtung 13 ein Snowboard 25 und ein Paar Ski 26, 27 eingebracht. Das Snowboard 25 ist mit seinem unteren Ende 28 auf dem Bodenbereich 17, nämlich auf der Bodenfläche 18 des Bodenbereichs 17, abgestellt. An einem oberen Abschnitt lehnt das Snowboard 25 an dem Querträger 24 an. In analoger Weise sind die Ski 26, 27 an einem unteren Ende auf der Bodenfläche 18 abgestellt und lehnen ebenfalls in einem oberen Bereich an dem Querträger 24 an. An dem Querträger 24 können hier nicht gezeigte Schlaufen, Riemen oder andere Halteelemente oder Befestigungselemente vorgesehen sein, um die Gegenstände 25, 26, 27 an dem Querträger 24 zu befestigen und gegen Umfallen zu sichern.

In Fig. 2 ist ferner ein Trennelement 28 in Form einer Trennplatte im Bodenbereich 17 vorgesehen, das sich wie der Querträger 24 von dem Montagebereich 14 bis hin zu dem Außenabschnitt 21 erstreckt. Durch die Trennplatte 28 können Gegenstände, die auf einer Seite des Querträgers angeordnet sind, von Gegenständen separiert werden, die auf der anderen, gegenüberliegenden Seite des Querträgers 24 angeordnet sind. Die Separierung dieser Gegenstände im Bodenbereich 17 durch die Trennplatte 28 verhindert ein Verhaken oder Verkanten beidseitig abgestellter Gegenstände.

In Fig. 2 ist ferner erkennbar, dass die Vorrichtung 13 frei über dem Boden 2 des Innenraums 1 schwebend aufgehängt ist, den Boden also nicht berührt.

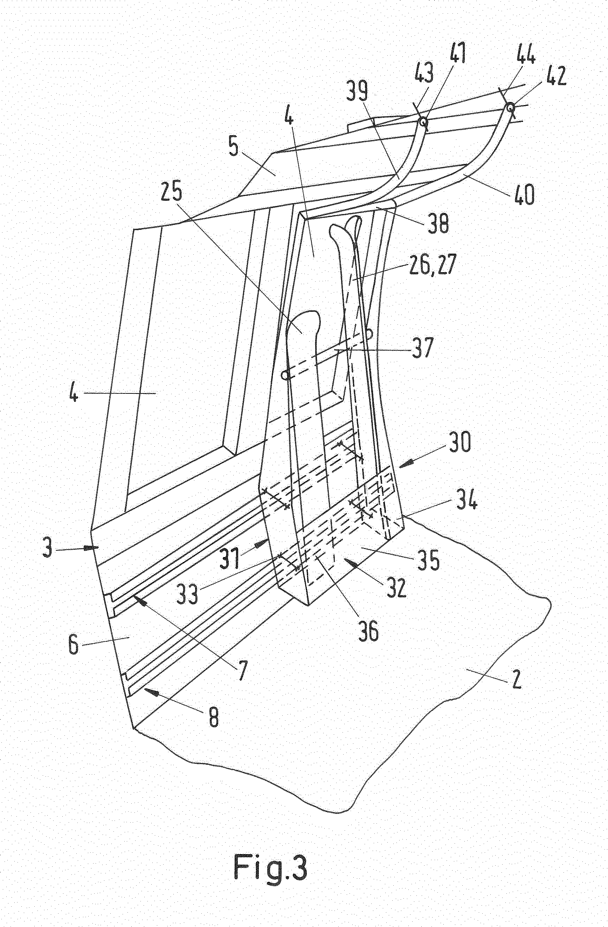

Fig. 3 zeigt eine alternative Ausführungsform einer erfindungsgemäßen Vorrichtung 30 mit dem Montagebereich 31 und dem Bodenbereich 32. Die Befestigung des Montagebereichs 31 kann auf analoge Art und Weise erfolgen wie die Befestigung des Montagebereichs 14 in Fig. 2, ist aber nicht näher gezeigt.

Im Unterschied zur Ausführungsform der Fig. 2 erstreckt sich bei der Ausführungsform der Fig. 3 der Bodenbereich 32 mit seiner langen Seite in Fahrzeuglängsrichtung, während er in Fig. 2 in Fahrzeugquerrichtung ausgerichtet ist. Die Seitenwände 33, 34 erstrecken sich von der Bodenfläche 35, die sie je seitlich begrenzen, bis in den Montagebereich 31. In Richtung Fahrzeuginnenraum 1 wird das Bodenelement 33 durch die Platte 36 abgeschlossen, die als weiteres Begrenzungselement dient.

Statt eines Querträgers 24 wie in Fig. 2 weist die Vorrichtung 30 der Fig. 3 eine Querstange 37 als Stützelement auf.

Der Montagebereich 31 ist am unteren Abschnitt 6 der Wand 3 an den C-Schienen 7, 8 befestigt, analog wie in Fig. 2 der Montagebereiche 14. Über die eigentlichen Befestigungsbereiche hinaus dehnt sich der Montagebereich 31 nach oben bis über das Fenster 4 aus, wobei sich in diesem oberen Bereich die Seitenwände 33, 34 verjüngen. Am oberen Ende der Seitenwände 33, 34 sind diese durch die Querstrebe 38 zur Versteifung verbunden. An die Querstrebe 38 schließen sich die gebogenen Träger 39, 40 an. Die Biegung der Träger 39, 40 gibt in etwa den Konturverlauf der Decke 5 im Bereich der Fenster 4 wieder. An den Enden der Träger 39, 40 sind in Form von Bohrungen zweite Verbindungsmittel 41, 42 vorgesehen. Durch die Bohrungen 41, 42 sind Schrauben 43, 44 geführt, die in die Decke 5 oder einen nicht dargestellten Deckenträger eingeführt sind.

Wie auch die Vorrichtung 13 aus Fig. 2 ist die Vorrichtung 30 aus Fig. 3 schwebend über dem Boden 2 des Fahrzeugs aufgehängt.

In der Fig. 4 weist eine Vorrichtung 50 gemäß einer dritten Ausführungsform den plattenförmigen Montagebereich 51 und den ebenfalls lediglich plattenförmig ausgebildeten Bodenbereich 52 auf. Der Montagebereich 51 ist auf gleiche Art und Weise an den C-Schienen 7, 8 befestigt wie Montagebereiche in vorangehenden Figuren. Die Bodenplatte 52 ist in nicht näher dargestellter Art und Weise mit dem Montagebereich 51 verbunden. An den Montagebereich 51 schließt sich nach oben der senkrechte Träger 53 an, der parallel zur Wand 3 verläuft. An seinem oberen Ende ist der Träger 53 mit einem weiteren gebogenen Träger 54 verbunden, der mit dem Befestigungsmittel 55, beispielsweise einer Befestigungsklemme, an der Haltestange 56 befestigt ist. Die Haltestange 56 ist an der nicht näher dargestellten Decke des Innenraums befestigt.

Als Stützelement weist die Vorrichtung 50 eine Wand in Form einer Platte 57 auf. Die Platte 57 kann auch Längs in Fahrtrichtung montiert werden, was insbesondere zum Anlehnen und Befestigen von Fahrrädern von Vorteil ist. Auf der Bodenplatte 52 abgestellte Gegenstände können an die Platte 57 angelehnt werden. Ferner weist die Platte 57 die Befestigungsmittel 58, 59, 60 auf. Jedes der Befestigungsmittel 58, 59 60 ist in diesem Beispiel aus zwei Ösen gebildet, von denen bei dem Befestigungsmittel 58 die Ösen 61, 62 beispielhaft bezeichnet sind, und dem Gummiband 63, das an der Öse 62 befestigt ist und in die Öse 61 eingehakt werden kann. Zwischen die Ösen 61, 62 kann beispielsweise ein Paar Ski eingeführt werden und mit dem Gummiband 63 gesichert werden. Alternativ oder zusätzlich ist jedes andere Halte- oder Befestigungsmittel für abgestellte Gegenstände denkbar, wie an anderer Stelle bereits genannt.

Die Bodenplatte 52, die in dieser Ausführungsform den Bodenbereich bildet, kann auf der Oberseite mit einem rutschfesten Material versehen sein, wie im Übrigen auch jegliche Bodenflächen anderer gezeigter Bodenbereiche.

## Patentansprüche

1. Vorrichtung (13; 30; 50) zum Verstauen eines sperrigen und/oder länglichen Gegenstands (25, 26, 27) in einem Fahrgastraum (1) eines Fahrzeugs des öffentlichen Verkehrs, aufweisend
- einen Montagebereich (14; 31; 51), über den die Vorrichtung an einer Wand (3) des Fahrzeugs befestigbar ist, und der zumindest ein erstes Verbindungsmittel (16a, 16b, 16c, 16d) zur Befestigung der Vorrichtung an der Wand aufweist,
- einen vom Montagebereich (14; 31; 51) abstehenden Bodenbereich (17; 32; 52), der mit dem Montagebereich verbunden ist, und auf dem der Gegenstand (25, 26, 27) abstellbar ist,
- zumindest eine über dem Bodenbereich angeordnetes Stützelement (24; 37; 57) zum Abstützen des Gegenstandes (25, 26, 27),
**gekennzeichnet durch**
- ein über dem Bodenbereich (17; 32; 52) angeordnetes Befestigungsmittel (58, 59, 60, 61, 62, 63) zur Befestigung des Gegenstandes (25, 26, 27) an der Vorrichtung, wobei das Befestigungsmittel an dem Stützelement (24; 37; 57) angeordnet ist und wobei der Gegenstand (25, 26, 27), wenn er auf dem Bodenbereich (17; 32; 52) abgestellt ist, mit dem Befestigungsmittel in einer höheren Position an der Vorrichtung befestigt werden kann und
wobei die Vorrichtung ein zweites Verbindungsmittel (22, 23; 41, 42; 55) aufweist, mit welchem die Vorrichtung (13; 30; 50) an einer Fahrgasthaltestange (56) oder an einer Decke (5) des Fahrgastraums befestigbar ist.

2. Vorrichtung (13; 30; 50) nach Anspruch 1, wobei die Vorrichtung (13; 30; 50) als in Einbaulage in dem Fahrgastraum an der Wand (3) hängende Vorrichtung ausgestaltet ist, bei welcher der Bodenbereich (17; 32; 52) berührungslos zu einem Boden (2) des Fahrgastraums (1) ist.

3. Vorrichtung (13; 30) nach zumindest einem der vorangehenden Ansprüche, wobei der Bodenbereich (17; 32) eine Bodenfläche (18; 35) und zumindest ein die Bodenfläche am Rand der Bodenfläche begrenzendes Begrenzungselement (19, 20; 33, 34, 36) aufweist.

4. Vorrichtung (13; 30) nach zumindest einem der vorangehenden Ansprüche, wobei der Bodenbereich (17; 32) wannenförmig ist.

5. Vorrichtung (13; 30; 50) nach zumindest einem der vorangehenden Ansprüche, wobei der Bodenbereich (52) und der Montagebereich lösbar miteinander verbunden sind .

6. Vorrichtung (13; 30; 50) nach zumindest einem der vorangehenden Ansprüche, wobei das erste Verbindungsmittel so angeordnet und/oder ausgestaltet ist, dass die Vorrichtung an einem unteren Abschnitt (6) der Wand (3) befestigbar ist.

7. Vorrichtung (13) nach zumindest einem der vorangehenden Ansprüche, wobei das erste Verbindungsmittel (16a, 16b, 16c, 16d), so angeordnet und/oder ausgestaltet ist, dass es mit einem an der Wand angeordneten dritten Verbindungsmittel (7, 8), das zur Befestigung eines oder mehrerer Sitze (10, 11) vorgesehen ist, zusammenwirken kann, sodass die Vorrichtung alternativ zu dem Sitz/den Sitzen (10, 11) an der Wand befestigbar ist.

8. Vorrichtung (13) nach zumindest einem der vorangehenden Ansprüche, aufweisend einen sich vom Bodenbereich nach oben erstreckenden Außenabschnitt (21), der die Vorrichtung zu dem Fahrgastraum hin begrenzt.

9. Schienenfahrzeug, aufweisend eine Vorrichtung nach zumindest einem der Ansprüche 1-8.

10. Schienenfahrzeug nach Anspruch 9, wobei die Vorrichtung über ein an einer Wand (3) des Schienenfahrzeugs angeordnetes drittes Verbindungsmittel (7, 8), das alternativ zur Befestigung eines Sitzes (10, 11) vorgesehen ist, an der Wand (3) angebracht ist.

11. Verfahren zur Bestückung eines Fahrgastraums eines Fahrzeugs des öffentlichen Verkehrs mit einer Vorrichtung (13; 30; 50) zum Verstauen eines sperrigen und/oder länglichen Gegenstands (25, 26, 27) in dem Fahrgastraum (1), wobei bei dem Verfahren eine Vorrichtung nach zumindest einem der Ansprüche 1-8 über ein an einer Wand (3) des Fahrzeugs angeordnetes Verbindungsmittel (7, 8), das alternativ zur Befestigung eines Sitzes (10, 11) vorgesehen ist, an der Wand (3) angebracht wird.

## Claims

1. A device (13; 30; 50) for stowing a bulky and/or long article (25, 26, 27) in a passenger compartment (1) of a motor vehicle for public transportation, comprising:
- a mounting region (14; 31; 51) via which the device may be attached to a wall (3) of the motor vehicle and that has at least a first connecting means (16a, 16b, 16c, 16d) for attaching the device to the wall;
- a bottom region (17; 32; 52) that projects from the mounting region (14; 31; 51) and that is joined to the mounting region and on which the article (25, 26, 37) may be stowed;
- at least one support element (24; 37; 57) arranged above the bottom region for supporting the article (25, 26, 27),
**characterized by**
- an attaching means (58, 59, 60, 61, 62, 63) arranged above the bottom region (17; 32; 52) for attaching the article (25, 26, 27) to the device, wherein the attaching means is arranged at the support element (24; 37; 57) and wherein the article (25, 26, 27), if it is stowed on the bottom region (17; 3; 52), may be attached to the device with the attaching means at a higher position, and
- wherein the device has a second connecting means (22, 23; 41, 42; 55) with which the device (13; 30; 50) may be attached to a passenger grab bar (56) or to a ceiling (5) of the passenger compartment.

2. The device (13; 30; 50) according to claim 1, wherein the device (13; 30; 50) when installed is embodied as a device hanging on the wall (3) in the passenger compartment, and the bottom region (17; 32; 52) of said device does not contact the floor (2) of the passenger compartment (1).

3. The device (13; 30) according to at least one of the preceding claims, wherein the bottom region (17; 32) has a bottom surface (18; 35) and at least one limiting element (19, 20; 33, 34, 36) adjacent to the bottom surface area at the edge of the bottom surface.

4. The device (13; 30) according to at least one of the preceding claims, wherein the bottom region (17; 32) is trough-shaped.

5. The device (13; 30; 50) according to at least one of the preceding claims, wherein the bottom region (52) and the mounting region are detachably joined to one another.

6. The device (13; 30; 50) according to at least one of the preceding claims, wherein the first connecting means is arranged and/or embodied such that the device may be attached to a lower section (6) of the wall (3).

7. The device (13) according to at least one of the preceding claims, wherein the first connecting means (16a, 16b, 16c, 16d) is arranged and/or embodied such that it can cooperate with a third connecting means (7, 8) that is arranged on the wall and that is provided for attaching one or a plurality of seats (10, 11), so that the device may be attached to the wall as an alternative to the seat/seats (10, 11).

8. The device (13) according to at least one of the preceding claims, having an outer section (21) that extends upward from the bottom region and that delineates the device from the passenger compartment.

9. A rail vehicle having a device according to at least one of claims 1-8.

10. The rail vehicle according to claim 9, wherein the device is attached to the wall (3) via a third connecting means (7, 8) arranged on a wall (3) of the rail vehicle and is provided as an alternative to attaching a seat (10, 11).

11. A method for equipping a passenger compartment of a motor vehicle for public transportation with a device (13; 30; 50) for stowing a bulky and/or long article (25, 26, 27) in the passenger compartment (1), wherein in the method a device according to at least one of claims 1-8 is attached to the wall (3) via a connecting means (7, 8) that is arranged on a wall (3) of the motor vehicle and is provided as an alternative to attaching a seat (10, 11).

## Revendications

1. Dispositif (13 ; 30 ; 50) pour le rangement d'un objet (25, 26, 27) encombrant et/ou allongé dans un habitacle (1) d'un véhicule du transport public, présentant
- une zone de montage (14 ; 31 ; 51), par l'intermédiaire de laquelle le dispositif peut être fixé sur une paroi (3) du véhicule, et qui présente au moins un premier moyen de liaison (16a, 16b, 16c, 16d) pour la fixation du dispositif sur la paroi,
- une zone de fond (17 ; 32 ; 52) éloignée de la zone de montage (14 ; 31 ; 51), qui est reliée à la zone de montage, et sur laquelle l'objet (25, 26, 27) peut être posé,
- au moins un élément d'appui (24 ; 37 ; 57) disposé au-dessus de la zone de fond et destiné à servir d'appui à l'objet (25, 26, 27),
**caractérisé par**
- un moyen de fixation (58, 59, 60, 61, 62, 63) disposé au-dessus de la zone de fond (17 ; 32 ; 52) et destiné à fixer l'objet (25, 26, 27) sur le dispositif, dans lequel le moyen de fixation est disposé sur l'élément d'appui (24 ; 37 ; 57) et dans lequel l'objet (25, 26, 27), lorsqu'il est posé sur la zone de fond (17 ; 32 ; 52), peut être fixé sur le dispositif dans une position plus haute avec le moyen de fixation et
dans lequel le dispositif présente un deuxième moyen de liaison (22, 23 ; 41, 42 ; 55), avec lequel le dispositif (13 ; 30 ; 50) peut être fixé sur une barre de retenue de passager (56) ou sur un plafond (5) de l'habitacle.

2. Dispositif (13 ; 30 ; 50) selon la revendication 1, dans lequel le dispositif (13 ; 30 ; 50) est réalisé en tant que dispositif suspendu à la paroi (3) dans l'habitacle dans la position de montage, où la zone de fond (17 ; 32 ; 52) est sans contact par rapport à un fond (2) de l'habitacle (1).

3. Dispositif (13 ; 30) selon au moins l'une des revendications précédentes, dans lequel la zone de fond (17 ; 32) présente une surface de fond (18 ; 35) et au moins un élément de délimitation (19, 20 ; 33, 34, 36) délimitant la surface de fond sur le bord de la surface de fond.

4. Dispositif (13 ; 30) selon au moins l'une des revendications précédentes, dans lequel la zone de fond (17 ; 32) est en forme de cuvette.

5. Dispositif (13 ; 30 ; 50) selon au moins l'une des revendications précédentes, dans lequel la zone de fond (52) et la zone de montage sont reliées l'une à l'autre de manière libérable.

6. Dispositif (13 ; 30 ; 50) selon au moins l'une des revendications précédentes, dans lequel le premier moyen de liaison est disposé et/ou réalisé de sorte que le dispositif peut être fixé sur une partie inférieure (6) de la paroi (3).

7. Dispositif (13) selon au moins l'une des revendications précédentes, dans lequel le premier moyen de liaison (16a, 16b, 16c, 16d) est disposé et/ou réalisé de sorte qu'il peut coopérer avec un troisième moyen de liaison (7, 8) disposé sur la paroi, qui est prévu pour la fixation d'un ou de plusieurs sièges (10, 11), de sorte que le dispositif peut être fixé sur la paroi en variante du siège/des sièges (10, 11).

8. Dispositif (13) selon au moins l'une des revendications précédentes, présentant une partie extérieure (21) s'étendant vers le haut depuis la zone de fond, qui délimite le dispositif en direction de l'habitacle.

9. Véhicule ferroviaire, présentant un dispositif selon au moins l'une des revendications 1 à 8.

10. Véhicule ferroviaire selon la revendication 9, dans lequel le dispositif est monté sur la paroi (3) par l'intermédiaire d'un troisième moyen de liaison (7, 8), disposé sur une paroi (3) du véhicule ferroviaire, qui est prévu en variante de la fixation d'un siège (10, 11).

11. Procédé pour équiper un habitacle d'un véhicule du transport public d'un dispositif (13 ; 30 ; 50) pour le rangement d'un objet (25, 26, 27) encombrant et/ou allongé dans l'habitacle (1), dans lequel, selon le procédé, un dispositif selon au moins l'une des revendications 1 à 8 est monté sur la paroi (3) par l'intermédiaire d'un moyen de liaison (7, 8), disposé sur une paroi (3) du véhicule, qui est prévu en variante de la fixation d'un siège (10, 11).
